# EUROPEAN PATENT APPLICATION

(11) **EP 4 717 573 A1**
(43) Date of publication of application: **01.04.2026**
(21) Application number: 25205115.6
(22) Date of filing: 26.09.2025
(51) Int. Cl.: B62J 40/10, F02M 35/16, B62J 17/10, B62K 11/04, B62M 7/02

(54) **SADDLED VEHICLE**

(30) Priority: 30.09.2024 JP 2024171546
(71) Applicant: HONDA MOTOR CO., LTD., Tokyo 105-8404 (JP)
(72) Inventor: MAHIRA, Hiroshi, Tokyo, 105-8404 (JP); ICHIKAWA, Gen, Tokyo, 105-8404 (JP)
(74) Representative: Dehns

(57) **Abstract**

A saddled vehicle (1) is provided which can curb an expansion in the vehicle-width direction dimension while arranging an air cleaner box (30) of sufficient volume on an outer side in the vehicle-width direction. In a saddled vehicle (1) including a head pipe (F1) pivotally supporting a steering mechanism of a front wheel (WF) to freely rotate; a pair of left and right main frames (F2, F3) coupled to a rear portion of the head pipe (F1); and an air cleaner box (30) housing an air filter (36), the air cleaner box (30) is arranged at an outer side in a vehicle-width direction of the main frames (F2, F3). The air cleaner box (30) has at least a portion thereof overlapping with the head pipe (F1) in a side view of a vehicle body.

## Description

### BACKGROUND OF THE INVENTION

### Field of the Invention

The present invention relates to a saddled vehicle, and in particular, relates to a saddled vehicle including an air cleaner box in which an air filter filtering the outside air supplied to an internal combustion engine is housed.

### Related Art

Conventionally, among saddled vehicles having main frames which extend downwards to the rear from a head pipe that pivotally supports a steering mechanism of the front wheel to freely swing, a saddled vehicle has been known in which a portion of an intake device for introducing outside air to the internal combustion engine is arranged at a position on the outer side in the vehicle-width direction of the pair of left and right main frames.

PCT International Publication No. WO2019/155689 discloses a saddled vehicle that arranges an air cleaner box at a position between the pair of left and right main frames, and in which a pair of left and right intake ducts for introducing outside air to the air cleaner box are arranged at outer sides in the vehicle width direction of the main frames.

Patent Document 1: PCT International Publication No. WO2019/155689

### SUMMARY OF THE INVENTION

Herein, when trying to arranged the air cleaner box itself that houses the air filter on the outer side in the vehicle-width direction of the main frame, although the vehicle-width direction dimension of the saddled vehicle tends to expand, Patent Document 1 has not given consideration to a design for arranging an air cleaner box on the outer side in the vehicle-width direction of the main frame, while suppressing an expansion in the vehicle-width direction dimension.

An object of the present invention is to address the above-mentioned problem of the conventional technology and provide a saddled vehicle which can suppress an expansion in the vehicle-width direction dimension, while arranging an air cleaner box of sufficient volume on the outer side in the vehicle-width direction of the main frame.

In order to address the above-mentioned problem, a first aspect of the present invention provides a saddled vehicle (1) including a head pipe (F1) pivotally supporting a steering mechanism of a front wheel (WF) to freely rotate; a pair of left and right main frames (F2, F3) coupled to a rear portion of the head pipe (F1); and an air cleaner box (30) housing an air filter (36), in which the air cleaner box (30) is arranged at an outer side in a vehicle-width direction of the main frames (F2, F3), and the air cleaner box (30) has at least a portion thereof overlapping with the head pipe (F1) in a side view of a vehicle body.

Furthermore, according to a second aspect, the air cleaner box (30) is arranged at an outer side of the main frame (F2, F3) on one side in the vehicle-width direction, and a functional component (21, 22) is arranged at an outer side of the main frame (F2, F3) on another side in the vehicle-width direction.

In addition, according to a third aspect, the air cleaner box (30) includes an intake duct (33) that introduces outside air from an intake port (33a) in a front portion thereof, and a cover member (31) that covers the intake duct (33) from ahead, and a guide member (60), which covers the intake port (33a) from ahead and at least portion thereof overlaps with the intake duct (33) in a side view of the vehicle body, is provided at an inner side of the cover member (31).

Moreover, according to a fourth aspect, the intake duct (33) is arranged to slope downwards ahead in a side view of the vehicle body.

Furthermore, according to a fifth aspect, a discharge port (31b) functioning as a through hole is provided at a forward position in a bottom portion of the duct member (31), and the guide member (60) is arranged between an intake port (33a) of the intake duct (33) and the discharge port (31b).

According to the first aspect, in the saddled vehicle (1) including a head pipe (F1) pivotally supporting a steering mechanism of a front wheel (WF) to freely rotate; a pair of left and right main frames (F2, F3) coupled to a rear portion of the head pipe (F1); and an air cleaner box (30) housing an air filter (36), the air cleaner box (30) is arranged at an outer side in a vehicle-width direction of the main frames (F2, F3), and the air cleaner box (30) has at least a portion thereof overlapping with the head pipe (F1) in a side view of a vehicle body. Therefore, by arranging the air cleaner box at a position overlapping with the head pipe in a front/rear direction, it becomes possible to effectively utilize the space around the head pipe, and ensure sufficient volume of the air cleaner box, while suppressing a size increase in the vehicle-width direction.

According to the second aspect, the air cleaner box (30) is arranged at an outer side of the main frame (F2, F3) on one side in the vehicle-width direction, and a functional component (21, 22) is arranged at an outer side of the main frame (F2, F3) on another side in the vehicle-width direction. Therefore, by distributively arranging the air cleaner box and the functional components on both sides of the head pipe, it becomes possible to keep the left/right weight balance of the saddled vehicle.

According to the third aspect, the air cleaner box (30) includes an intake duct (33) that introduces outside air from an intake port (33a) in a front portion thereof, and a cover member (31) that covers the intake duct (33) from ahead, and a guide member (60), which covers the intake port (33a) from ahead and at least portion thereof overlaps with the intake duct (33) in a side view of the vehicle body, is provided at an inner side of the cover member (31). Therefore, it becomes possible to more effectively suppress moisture, dust, etc. from penetrating into the intake duct.

According to the fourth aspect, the intake duct (33) is arranged to slope downwards ahead in a side view of the vehicle body. Therefore, moisture, etc. is unlikely to enter from the front into the intake duct, and will tend to discharge forwards.

According to the fifth aspect, the discharge port (31b) functioning as a through hole is provided at a forward position in a bottom portion of the duct member (31), and the guide member (60) is arranged between an intake port (33a) of the intake duct (33) and the discharge port (31b). Therefore, it becomes possible to suppress moisture, etc. from infiltrating the intake duct by way of the guide member, and efficiently discharge from the discharge hole the moisture, etc. discharged forwards from the intake port.

### BRIEF DESCRIPTION OF THE DRAWINGS

Embodiments of the invention will now be described, by way of example only, with reference to the accompanying drawings, wherein:
FIG. 1 is a right-side view of a motorbike according to an embodiment of the present invention;
FIG. 2 is a partial enlarged view of FIG. 1;
FIG. 3 is a partial enlarged front view of a motorbike;
FIG. 4 is a right-side view showing a state in which a cover member and an intake duct are removed from the motorbike of FIG. 2;
FIG. 5 is a cross-sectional view along the line V-V in FIG. 4;
FIG. 6 is a partial enlarged plan view of a motorbike;
FIG. 7 is a cross-sectional view along the line VII-VII in FIG. 3;
FIG. 8 is a partial enlarged view of FIG. 5; and
FIG. 9 is a cross-sectional view along the line IX-IX in FIG. 3.

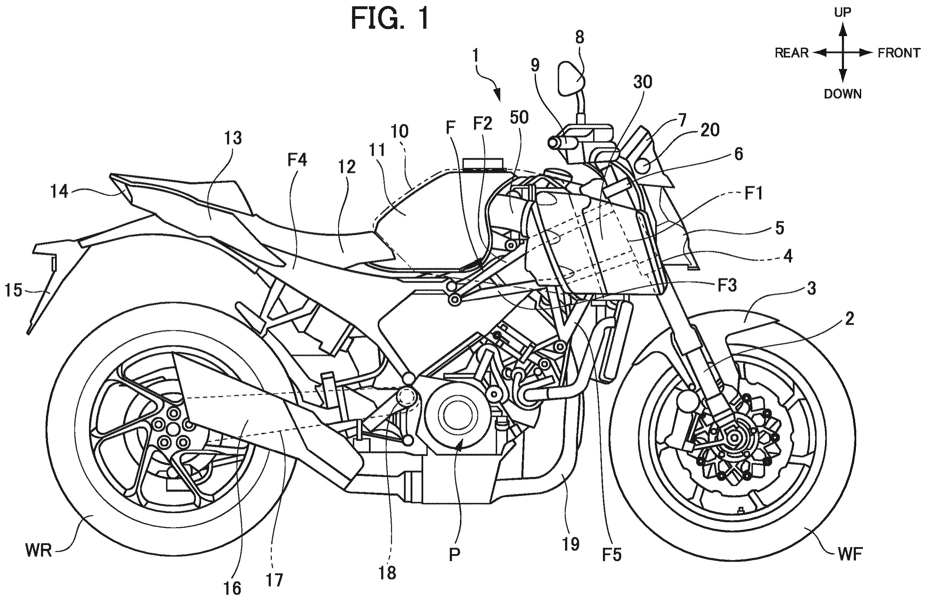

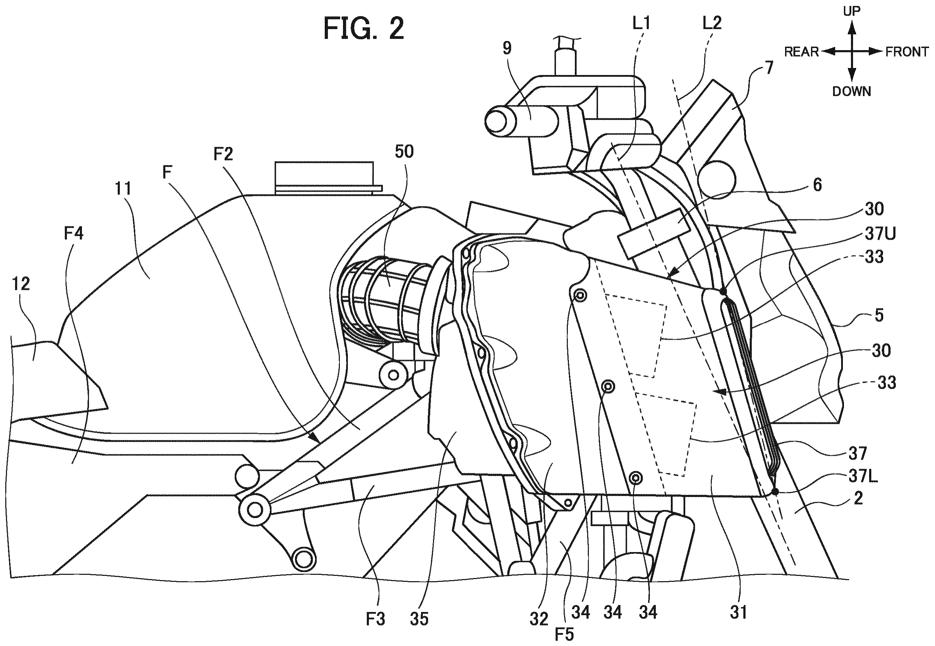

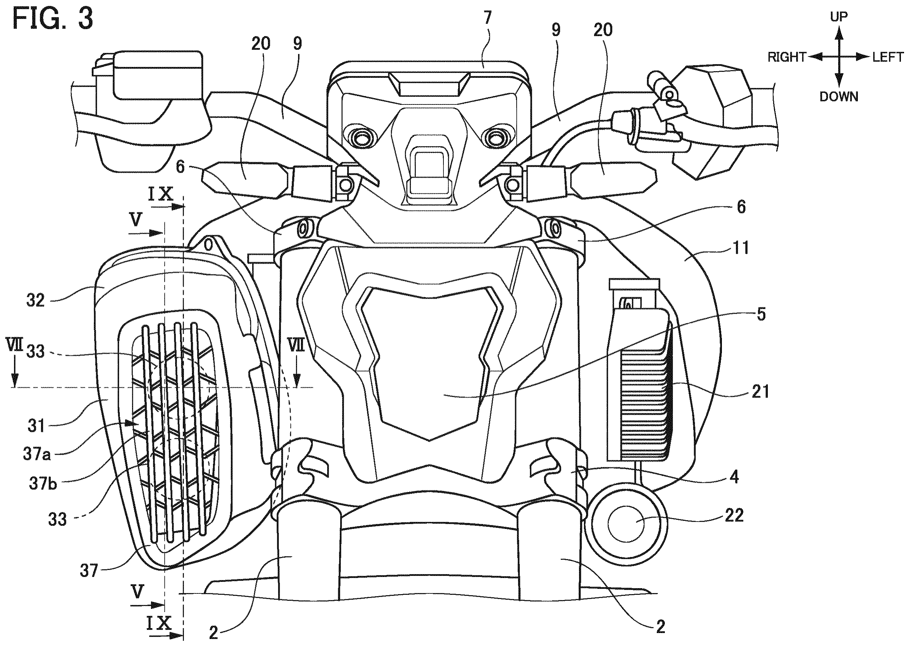

Hereinafter, a preferred mode for carrying out the present invention will be described in detail by referencing the drawings. FIG. 1 is a right-side view of a motorbike 1 according to an embodiment of the present invention. In addition, FIG. 2 is a partial enlarged view of FIG. 1, and FIG. 3 is a partial enlarged front view of the motorbike 1. The motorbike 1 is a saddled vehicle that travels by transmitting to a rear wheel WR the drive power of a power unit P in which an internal combustion engine and a transmission are configured integrally.

A head pipe F1 pivotally supporting a steering stem (not shown) to freely rotate is fixed to a front end portion of a pair of left and right upper main frames F2 and lower main frames F3 constituting a vehicle frame F. A top bridge 6 and a bottom bridge 4 supporting a pair of left and right front forks 2 are fixed above and below the steering stem. A steering handlebar 9 that steers the steering mechanism of a front wheel WF is mounted to an upper portion of the top bridge 6. A rearview mirror 8 is mounted to the steering handlebar 9. The front wheel WF is pivotally supported to freely rotate to the lower end portion of the front forks 2. A front fender 3 covering above the front wheel WF is mounted to the front forks 2.

A hanger frame F5 supporting a forward upper portion of the power unit P is connected to a lower portion of the lower main frame F2. A rear frame F4 supporting a seat 12 is connected to rear portions of the upper main frame F2 and the lower main frame F3. The lower end portion of the rear frame F4 supports a rearward lower portion of the power unit P. The combustion gas of the power unit P is discharged from a muffler 16 on the right side in the vehicle-width direction via an exhaust pipe 19. A cantilever-type swingarm 17 that pivotally supports the rear wheel WR to freely rotate is pivotally supports to freely swing by a pivot 18 provided to a rear portion of the power unit P.

A fuel tank 11 is installed above the upper main frame F2. A metering device 7 supporting a pair of left and right front flasher lamps 20 and a headlight 5 are arranged ahead of the head pipe F1. On the other hand, a rear cowl 13 supporting a taillight device 14 and a rear fender 15 covering the rear above the rear wheel WR are mounted to a rear portion of the rear frame F4.

The motorbike 1 according to the present embodiment has a feature in the point of the air cleaner box 30 in which an air filter filtering outside air is housed being arranged on the right side in the vehicle-width direction of the upper main frame F2 and the lower main frame F3 on the right side in the vehicle-width direction. Furthermore, the air cleaner box 30 is arranged so that at least a part thereof overlaps the head pipe F1 in a side view of the vehicle body. It thereby becomes possible to effectively utilize the space around the head pipe F1, and ensure sufficient volume of the air cleaner box 30, while suppressing a size increase in the vehicle-width direction of the motorbike 1. In addition, a regulator rectifier 21 and a horn 22 as functional components are arranged on the left side in the vehicle-width direction of the upper main frame F2 and the lower main frame F3. It thereby becomes possible to keep the left/right weight balance of the motorbike 1, by distributively arranging the air cleaner box 30 and the functional components on both sides of the head pipe F1.

The air cleaner box 30 is configured to include a front casing 32 and a rear casing 35 housing the air filter, and a cover member 31 covering a front portion of the front casing 32. The cover member 31 is fixed to the front casing 32 by three fastening members 34. An intake passage 50 coupled to a throttle body arranged below the fuel tank 11 is connected to a rear portion of the rear casing 35. The intake passage 50 curves so as to straddle above the upper main frames F2 and is led to the inner side of the vehicle body.

Two intake ducts 33 introducing outside air to a space formed by the front casing 32 and the rear casing 35 is mounted to the front casing 32. An inlet member 37 in which four louvers 37b oriented in the vertical direction are formed is mounted to a front portion of the cover member 31. An intake port 37a for outside air makes a plurality of small polygonal shapes by the connection members which are bridged between the louvers 37b, and protects against foreign matter or the like penetrating to the air cleaner box 30. A position from the fuel tank 11 to the front casing 32 is covered by a body cover 10 formed with synthetic resin or the like.

Referring to FIG. 2, the front surface of the intake member 37 mounted to the cover member 31 slopes to the rear side relative to the vertical direction. More specifically, a straight line L2 connecting an upper end 37U and lower end 37L of the intake member 37 has a sloping angle closer to the vertical direction than an axis line L1 of the head pipe F1. In addition, referring to FIG. 3, in a front view of the vehicle body, a wall portion of the air cleaner box 30 on the outer side in the vehicle-width direction is established in a shape extending from an upper portion downwards in the vertical direction, followed by sloping from an intermediate position of the vertical dimension towards the inner side in the vehicle-width direction, and extending downwards. On the other hand, the wall portion of the air cleaner box 30 on the inner side in the vehicle-width direction bulges to the inner side in the vehicle-width direction until a position overlapping the front forks 2, whereby the volume of the air cleaner box 30 is expanded.

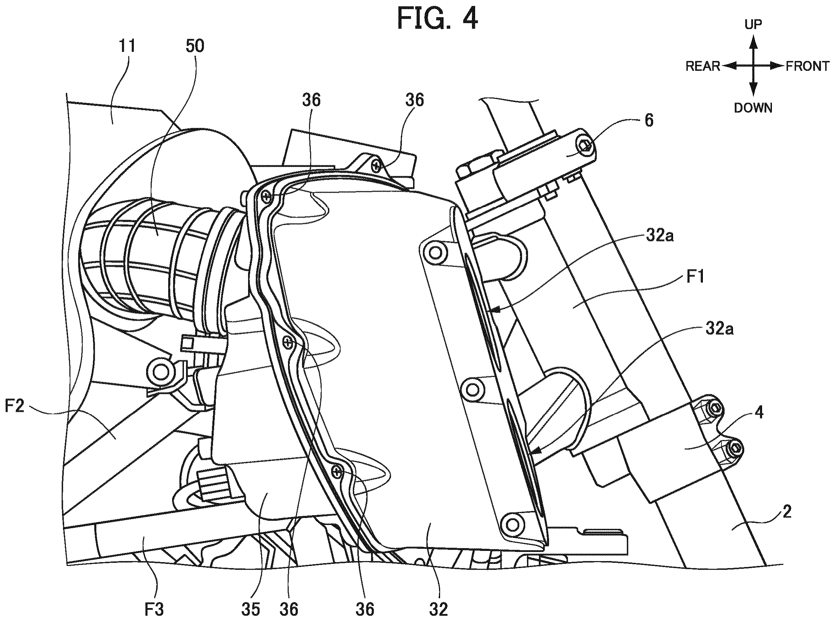

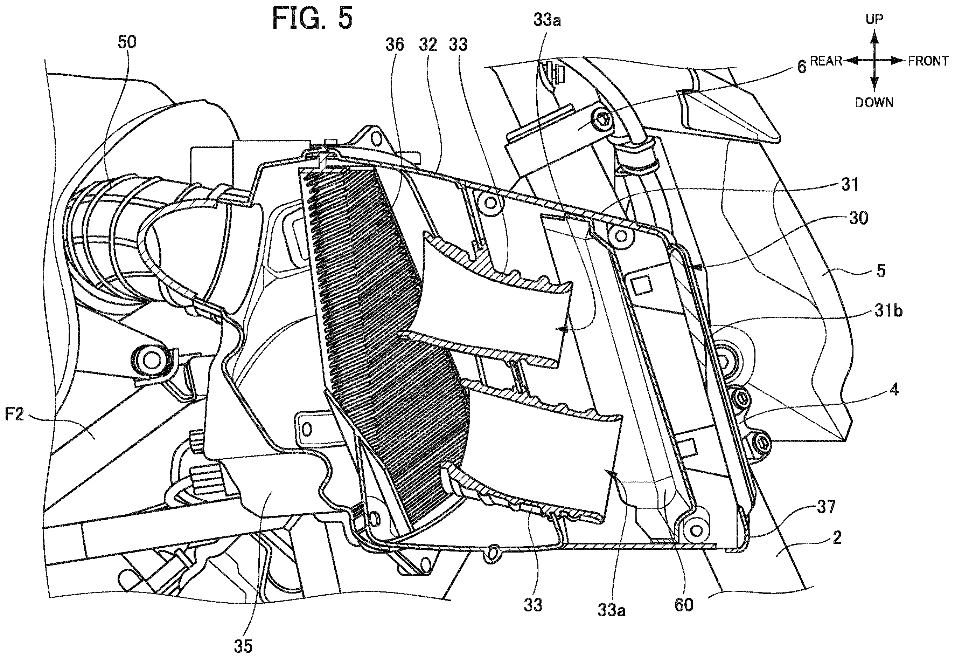

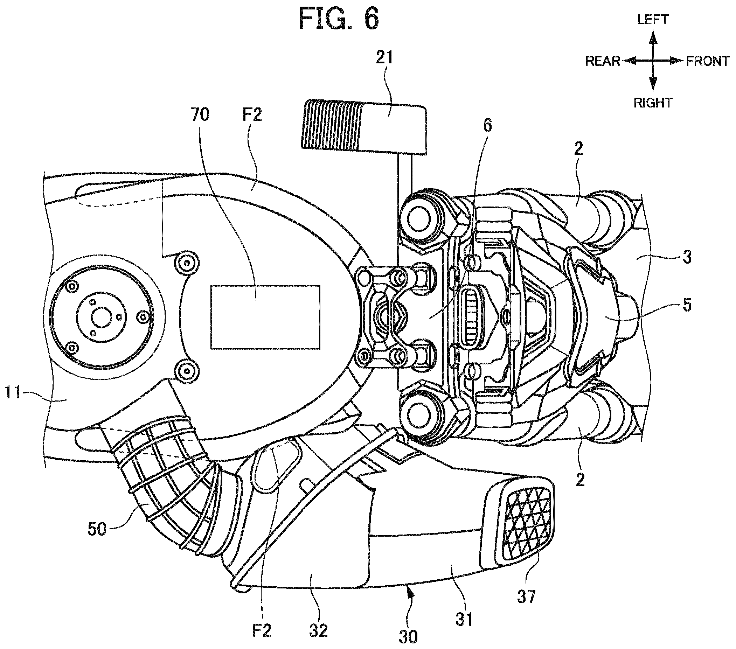

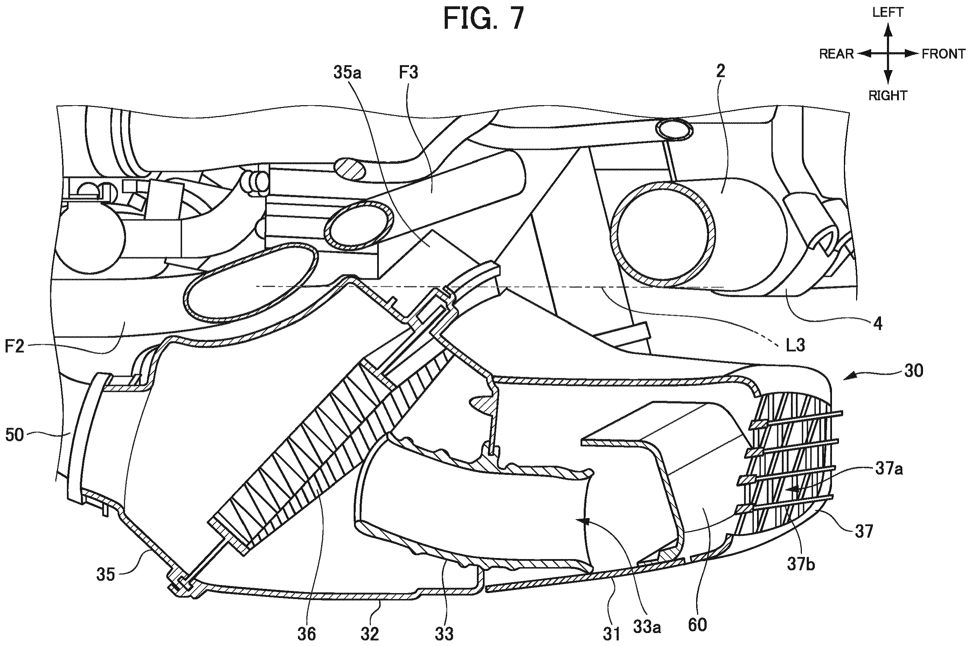

FIG. 4 is a right-side view showing a state removing the cover member 31 and the intake duct 33 from the motorbike 1 in FIG. 2. In addition, FIG. 5 is a cross-sectional view along the line V-V in FIG. 3, FIG. 6 is a partial enlarged plan view of the motorbike 1, and FIG. 7 is a cross-sectional view along the line VII-VII in FIG. 3. The same reference symbols as previously described indicate identical or equivalent portions. FIG. 6 shows a state removing the body cover 10.

The front casing 32 and the rear casing 35 consisting of thin-plate members of synthetic resin are fastened by a plurality of fastening members 36. A thick plate-shaped air filter 36 is supported by being sandwiched by the front casing 32 and the rear casing 35. An opening 32a, to which the intake duct 33 formed from rubber or the like is inserted and fixed, is formed in the front surface of the front casing 32. A cylindrical intake duct 33 is arranged to slope downwards to the front in a side view of the vehicle body. Moisture, etc. is thereby unlikely to enter from the front into the intake duct 33, and will tend to discharge forwards.

In addition, a guide member 60 consisting of a thin-plate member of synthetic resin is arranged on an inner side of the cover member 31. The guide member 60 covers the intake port 33a of the intake duct 33 from the front, and is arranged so that at least a portion thereof overlaps with the intake duct 33 in a side view of the vehicle body. According to this guide member 60, it becomes possible to more effectively suppress moisture, dust, etc. from penetrating into the intake duct 33.

Referencing FIG. 6, the air cleaner box 30 established in a shape such that the vehicle width-direction dimension becomes larger as approaching the rear is arranged on the right side in the vehicle-width direction of the upper main frame F2 and the lower main frame F3. In a plan view of the vehicle body, the upper main frame F2 and the lower main frame F3 partly overlap with the wall portion of the air cleaner box 30 on the inner side in the vehicle-width direction. In addition, as shown in FIG. 7, a projection 35a of the air cleaner box 30 on the inner side in the vehicle-width direction projects to the inner side in the vehicle-width direction from a right-side position L3 of the front forks 2. Thereby, a volume expansion of the air cleaner box 30 is achieved by effectively utilizing the space behind the front forks 2.

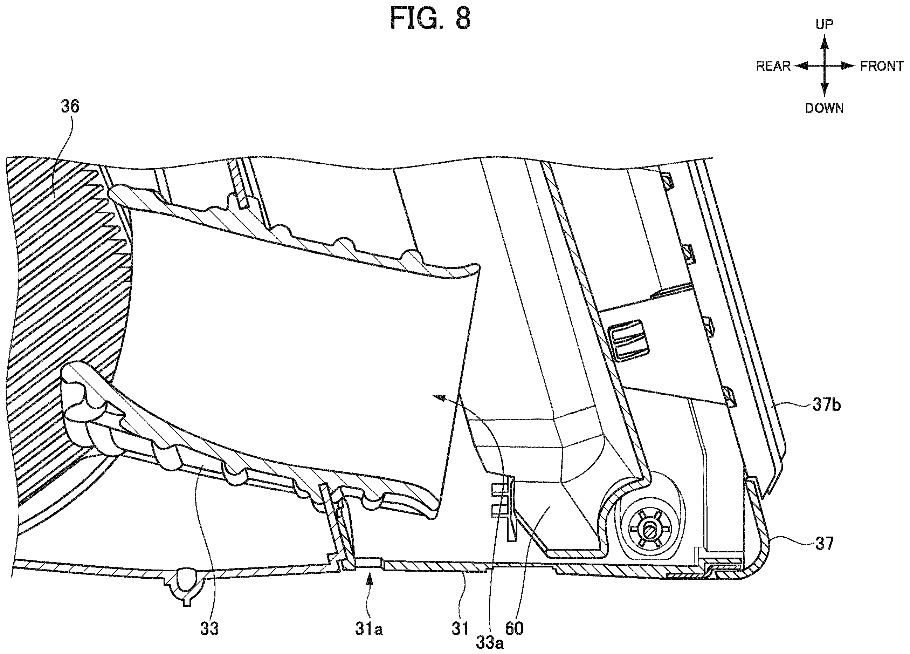

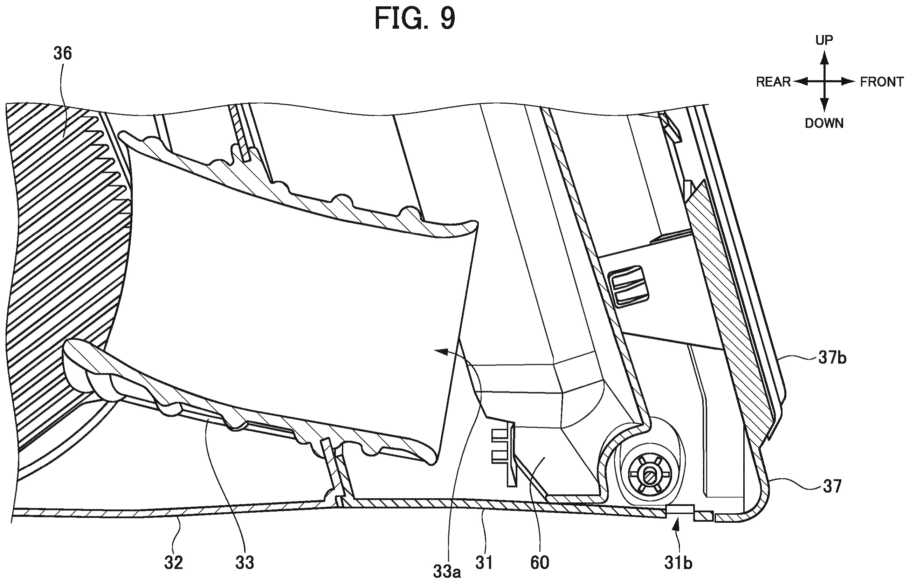

FIG. 8 is a partial enlarged view of FIG. 5. In addition, FIG. 9 is a cross-sectional view along the line IX-IX in FIG. 3. The same reference symbols as previously described indicate identical or equivalent portions. In the bottom wall of the cover member 31a, a first discharge hole 31a functioning as a through hole is formed at a position closer to the rear, and a second discharge hole 31b functioning as a through hole is formed at a position closer to the front. The second discharge hole 31b is provided more forwards than the guide member 60. In other words, the guide member 60 is arranged between the intake port 33a of the intake duct 33 and the second discharge hole 31b. It thereby becomes possible to suppress moisture, etc. from infiltrating the intake duct 33 by way of the guide member 60, and efficiently discharge from the second discharge hole 31b the moisture, etc. discharged forwards from the intake port 33. Furthermore, even in a case of moisture penetrating rearwards of the guide member 60 due to the pressure of traveling wind or the like, it is possible to efficiently discharge by the first discharge hole 31a formed at a position closer to the rear.

As described above, according to the air cleaner box structure related to the present invention, the air cleaner box 30 is arranged at the outer side in the vehicle-width direction of the main frames F2, F3 connected to the rear portion of the head pipe F1 of the motorbike 1, and the air cleaner box 30 is configured so that at least a portion thereof overlaps with the head pipe F1 in a side view of the vehicle body; therefore, by effectively utilizing the space around the head pipe F1, it is possible to secure sufficient volume for the air cleaner box 30, while suppressing a size increase in the vehicle-width direction of the motorbike 1.

The form of the motorbike, the form of the power unit, the shape and structure of the air cleaner box, the shape and structure of the intake duct, the number of intake ducts, the shape and structure of the main frame, the number of main frames, the type and number of functional components, the arrangement and number of discharge ports, etc. are not limited to the above-mentioned embodiment, and various modifications thereto are possible. For example, the air cleaner box may be arranged at the outer side of the main frame on the left side in the vehicle-width direction, and the functional components may be arranged at the outer side of the main frame on the right-side in the vehicle-width direction. The air cleaner box structure according to the present invention is not limited to a motorbike, and is applicable to various vehicles such as three-wheeled and four-wheeled vehicles.

### EXPLANATION OF REFERENCE NUMERALS

1 motorbike (saddled vehicle)
21 regulator rectifier (functional component)
22 horn (functional component)
30 air cleaner box
31 cover member
31b second discharge port (discharge port)
33 intake duct
33a intake port
36 air filter
60 guide member
F1 head pipe
F2 upper main frame (main frame)
F3 upper main frame (main frame)
WF front wheel

## Claims

1. A saddled vehicle (1) comprising a head pipe (F1) pivotally supporting a steering mechanism of a front wheel (WF) to freely rotate; a pair of left and right main frames (F2, F3) coupled to a rear portion of the head pipe (F1); and an air cleaner box (30) housing an air filter (36),
wherein the air cleaner box (30) is arranged at an outer side in a vehicle-width direction of the main frames (F2, F3), and
wherein the air cleaner box (30) has at least a portion thereof overlapping with the head pipe (F1) in a side view of a vehicle body.

2. The saddled vehicle according to claim 1, wherein the air cleaner box (30) is arranged at an outer side of the main frame (F2, F3) on one side in the vehicle-width direction, and
wherein a functional component (21, 22) is arranged at an outer side of the main frame (F2, F3) on another side in the vehicle-width direction.

3. The saddled vehicle according to claim 1 or 2, wherein the air cleaner box (30) includes an intake duct (33) that introduces outside air from an intake port (33a) in a front portion thereof, and a cover member (31) that covers the intake duct (33) from ahead, and
wherein a guide member (60), which covers the intake port (33a) from ahead and at least portion thereof overlaps with the intake duct (33) in a side view of the vehicle body, is provided at an inner side of the cover member (31).

4. The saddled vehicle according to claim 3, wherein the intake duct (33) is arranged to slope downwards ahead in a side view of the vehicle body.

5. The saddled vehicle according to claim 3, wherein a discharge port (31b) functioning as a through hole is provided at a forward position in a bottom portion of the duct member (31), and
wherein the guide member (60) is arranged between an intake port (33a) of the intake duct (33) and the discharge port (31b).
